Europäisches Patentamt

European Patent Office

Office européen des brevets

(11) Numéro de publication: **0 026 724**
**B1**

# FASCICULE DE BREVET EUROPEEN

(45) Date de publication du fascicule du brevet:
25.01.84

(51) Int. Cl.³: **B 23 Q 1/26,** B 66 C 11/16

(21) Numéro de dépôt: **80450004.9**

(22) Date de dépôt: **25.09.80**

(54) Dispositif d'interconnexion de deux chariots mobiles guidés par des rails parallèles.

(30) Priorité: **26.09.79 FR 7924459**

(43) Date de publication de la demande:
**08.04.81 Bulletin 81/14**

(45) Mention de la délivrance du brevet:
**25.01.84 Bulletin 84/4**

(84) Etats contractants désignés:
**AT BE CH DE GB IT LI LU NL SE**

(56) Documents cités:
**DE - A - 853 949**
**DE - B - 1 007 485**
**DE - C - 116 658**
**US - A - 2 743 024**

(73) Titulaire: **LECTRA SYSTEMES S.A., 12, chemin du Tillon, F-33140 Villenave d'Ornon (FR)**

(72) Inventeur: **Etcheparre, Jean, 367, avenue de Verdun, F-33700 Merignac (FR)**
Inventeur: **Etcheparre, Bernard, 367, avenue de Verdun, F-33700 Merignac (FR)**

(74) Mandataire: **Trolliet, Jean-Claude, Cabinet BURDIPAT 20, cours du Chapeau Rouge, F-33000 Bordeaux (FR)**

## Dispositif d'interconnexion de deux chariots mobiles guidés par des rails parallèles

La présente invention concerne un dispositif d'interconnexion de deux chariots mobiles reliés par une poutre rigide guidés par des rails parallèles comportant un dispositif à câble reliant les chariots aux rails de guidage parallèles, une extrémité de chaque câble étant fixée en l'extrémité d'un des rails de guidage tandis qu'intermédiairement les chariots sont reliés aux rails par appui des câbles sur un dispositif à poulie fixe de renvoi placé sur chacun des chariots, tel que connu du brevet DE-C-116 658.

L'invention a pour but de réaliser un dispositif d'interconnexion pour deux chariots mobiles reliés par une poutre rigide guidés par des rails parallèles pour permettre des mouvements simultanés identiques en sens et mesure des chariots sur leur rail respectif au moyen d'un dispositif à câble reliant les chariots aux rails de guidage parallèles dont l'extrémité de chacun est fixée en l'extrémité d'un des rails tandis que les chariots sont intermédiairement reliés entre les fixations des câbles aux rails par appui desdits câbles sur un dispositif à poulie fixe de renvoi placé sur chacun des chariots, caractérisé par la partie caractérisante de la revendication 1.

L'objet de l'invention ressortira plus clairement de la description qui va suivre faite en regard des dessins joints donnés à titre d'exemple non limitatif, où:

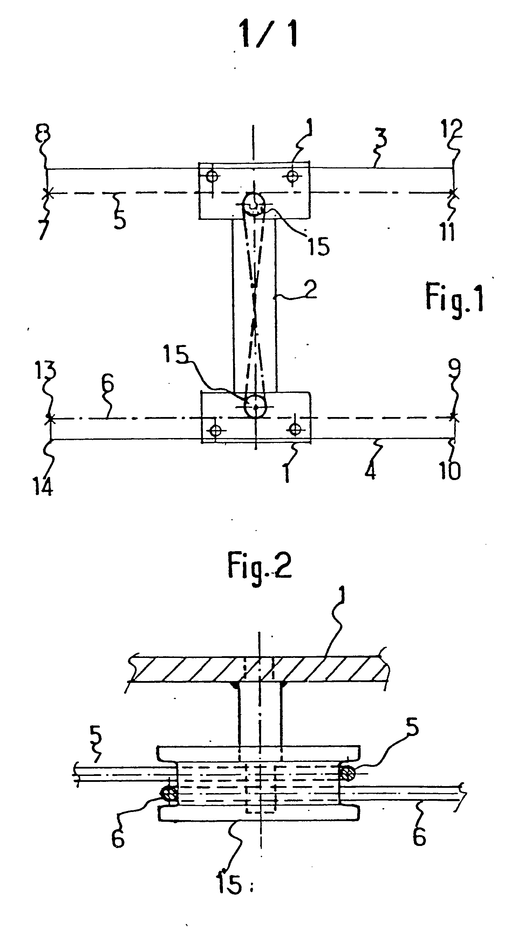

la figure 1 est un schéma de principe du dispositif, la figure 2, le détail d'une poulie de renvoi faisant ressortir l'appui des câbles.

Tel que représenté figures 1 et 2, le dispositif d'interconnexion de deux chariots 1 reliés par une poutre centrale rigide 2 et guidés par des rails 3 et 14 disposés parallèlement entre eux, comporte deux câbles symétriques 5 et 6, l'extrémité 7 du câble 5 est fixée en l'extrémité 8 du rail 3, tandis que son extrémité 9 est fixée en l'extrémité 10 du rail 4, et vice versa l'extrémité 11 du câble 6 est fixée en l'extrémité 12 du rail 3 et l'extrémité 13 en l'extrémité 14 du rail 4, intermédiairement entre les extrémités 7 et 9, 11 et 13 des câbles 5 et 6, ces derniers relient les chariots 1 en s'appuyant chacun sur une poulie de renvoi identique 15 placée symétriquement sur chacun desdits chariots 1 de sorte que chacun des câbles symétriques 5 ou 6 décrivent une forme en Z, la partie des câbles entre leur fixation 7, 9, 11 ou 13 et les poulies de renvoi 15 sur lesquelles ils s'appuient est parallèle aux rails de guidage 3 ou 4 correspondant, tandis que l'appui des câbles 5 et 6 sur les poulies de renvoi 15 s'effectue sur la tangente extérieure desdites poulies 15 par rapport à la fixation des câbles 5 et 6 sur les rails 3 ou 4 de façon à ce que durant le déplacement d'un chariot 1 dans un sens provoquant la tension d'un câble 5 ou 6, le câble recevant la tension implique à l'autre chariot un déplacement identique simultané tant en sens de déplacement que mesure, l'autre câble ayant pour fonction de maintenir les chariots en alignement.

Afin de régler la perpendicularité de la poutre 2 par rapport aux rails de guidage 3 et 4, celle-ci est obtenue au moyen d'un organe de tension non représenté agissant sur chacun des câbles.

**Revendications**

1. Dispositif d'interconnexion de deux chariots mobiles, (1, 1) reliés par une poutre rigide (2) guidés par des rails parallèles (3, 4) comportant un dispositif à câble (5, 6) reliant les chariots aux rails de guidage parallèles, une extrémité (7; 13) de chaque câble (5, 6) étant fixée en l'extrémité (8; 14) d'un des rails de guidage (3; 4), les chariots étant reliés intermédiairement entre les fixations des câbles aux rails par appui desdits câbles sur un dispositif à poulie fixe de renvoi (15) placé sur chacun des chariots, caractérisé en ce que ledit dispositif à câble comporte deux câbles symétriques (5; 6), l'autre extrémité (9; 11) de chaque câble est fixée en l'extrémité (10; 12) opposée du rail de guidage parallèle (4; 3), ledit dispositif à poulie comporte deux poulies fixes de renvoi identiques (15; 15) disposées symétriquement sur chacun des chariots et sur chacune desquelles chaque câble est tourné une fois afin de décrire une forme en Z symétrique, l'appui de chaque câble s'effectuant sur la tangente extérieure des poulies par rapport à leur fixation sur les rails de sorte que le déplacement d'un chariot provoque la tension d'un des câbles et impose un déplacement identique simultané tant en sens que mesure à l'autre chariot maintenu en alignement grâce au deuxième câble.

2. Dispositif d'interconnexion de deux chariots mobiles selon la revendication 1 caractérisé par le réglage de la perpendicularité de la poutre (2) par rapport aux rails de guidage (3, 4) au moyen d'organes de tension agissant sur chacun des câbles (5, 6).

**Patentansprüche**

1. Verbindungsvorrichtung bestehend aus zwei beweglichen Schlitten, (1, 1) verbunden durch einen starren Träger (2), gesteuert durch Parallelschienen (3, 4), versehen mit einer Kabelvorrichtung (5, 6), die die Schlitten mit den Parallelführungsschienen verbindet, ein Ende (7, 13) jedes Kabels (5, 6) ist am Ende (8, 14) einer der Führungsschienen (3, 4) befestigt, die Schlitten sind zwischen den Kabelbefestigungen an den Schienen durch Auflage der besagten Kabel auf eine Vorrichtung mit fester Führungsrolle (15) verbunden; die Vorrichtung mit fester Führungsrolle befindet sich auf jedem Schlitten und gekennzeichnet dadurch, dass die besagte Kabelvorrichtung mit zwei symmetrischen Kabeln (5, 6) versehen ist; das andere Ende (9, 11) jedes Kabels ist am gegenüberliegenden Ende (10, 12) der Parallelführungsschiene (4, 3) befestigt; die besagte Rollenvorrichtung umfasst zwei identische feste Führungsrollen (15; 15), die symmetrisch auf jedem Schlitten angeordnet sind und auf die jedes Kabel einmal gedreht wird, um eine symmetrische Z-Form zu bilden; die Auflage jedes Kabels erfolgt auf der äusseren Tangente der Rollen in bezug auf die Befestigung auf die Schienen, so dass die Verlagerung eines Schlittens die Straffung eines dieser Kabel auslöst und gleichzeitig eine identische Verlagerung (Mass und Richtung) des anderen Schlittens bewirkt, der mit Hilfe des zweiten Kabels in Ausrichtung gehalten wird.

2. Verbindungsvorrichtung bestehend aus 2 beweglichen Schlitten laut Patentanspruch 1, gekennzeichnet durch die Regulierung der Senkrechthaltung des Trägers im Verhältnis zu den Führungsschienen (3, 4) mit Hilfe von Straffungsorganen, die auf jedes Kabel (5, 6) reagieren.

## Claims

1. An interconnecting device for two mobile trolleys, (1, 1) linked by a rigid beam (2) guided by parallel rails (3, 4) with a cable support (5, 6) linking the trolleys to the parallel guiding rails, on end (7, 13) of each cable (5, 6) being attached at the end (8, 14) to one of the guiding rails (3, 4), the trolleys being linked intermediarily between the cable attachments on the rails by the said cables resting on a fixed return pulley device (15) located on each of the trolleys, featuring, as far as the cable support is concerned the carriage of two symmetrical cables (5, 6), the other end of each cable (9, 11) being attached to the opposite parallel guide rail's end (4, 3), the said pulley device includes two identical fixed return pulleys (15, 15) located symmetrically on each trolley and on each of wich, each cable goes round once, so as to describe a symmetrical Z form, the cable resting in both cases on the outside tangent of the pulley, compared with their attached end on each of the guiding rails so that the movement of a trolley causes one of the cables to become taught and thus imposes a similar simultaneous movement both in direction and speed of the other trolley, maintened in alignment, thanks to the second cable.

2. An interconnecting device for two mobile trolleys, with the same features as 1, but with perpendicular adjustement of the beam (2) compared with the guiding rails (3, 4) by means of tension appliances acting on each of the cables (5, 6).

# 1/ 1

Fig.1

Fig.2